## Europäisches Patentamt

## European Patent Office

## Office européen des brevets

(19)

(11) Numéro de publication: **0 263 726**
**B1**

(12)

# FASCICULE DE BREVET EUROPEEN

(45) Date de publication du fascicule du brevet:
**08.11.89**

(51) Int. Cl.⁴: **F02C 7/28,** F01D 11/00,
F16J 15/18

(21) Numéro de dépôt: **87401957.3**

(22) Date de dépôt: **02.09.87**

(54) **Dispositif de maintien d'un joint d'étanchéité sur un bout d'arbre et turbomachine le comportant.**

(30) Priorité: **17.09.86 FR 8612970**

(43) Date de publication de la demande:
**13.04.88 Bulletin 88/15**

(45) Mention de la délivrance du brevet:
**08.11.89 Bulletin 89/45**

(84) Etats contractants désignés:
**DE FR GB**

(56) Documents cités:
**FR-A- 2 246 782**
**US-A- 3 129 922**
**US-A- 3 463 498**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Boudot, Jean-Claude, 53, rue des Fossés, F-77850 Hericy(FR)**
Inventeur: **Naudet, Jacky, 9, place de la Remise Bondoufle, F-91000 Evry(FR)**

(74) Mandataire: **Gérard, Michel et al, S.N.E.C.M.A. Service des Brevets Boite Postale 81, F-91003 Evry Cédex(FR)**

ACTORUM AG

## Description

La présente invention concerne les dispositifs de maintien d'un joint d'étanchéité sur l'extrémité d'un arbre, tournant ou non, pour assurer une étanchéité entre l'arbre et l'alésage d'une pièce circulaire entourant l'arbre, ladite pièce circulaire pouvant être en rotation ou non, relativement à l'arbre. L'invention concerne également l'application d'un tel dispositif à un arbre de turbomachine, par exemple de turboréacteur ou de turbomachine à hélices contrarotatives, carénées ou non.

Lorsqu'on veut disposer un joint d'étanchéité en bout d'arbre, il est courant d'utiliser un joint torique ou annulaire à section carrée maintenu sur l'arbre entre deux anneaux au moyen d'un écrou vissé sur un filetage réalisé sur l'extrémité de l'arbre. Un tel dispositif nécessite de prévoir des moyens de verrouillage de l'écrou pour empêcher tout desserrage intempestif du dispositif d'étanchéité. Ce mode de fixation est encombrant, lourd et nécessite l'usinage d'un filetage, ce qui amène à un supplément de coût de réalisation.

Lorsqu'un tel dispositif est utilisé sur un arbre de turbomachine, notamment dans un turboréacteur d'aviation, les moyens de verrouillage à prévoir pour assurer une sécurité parfaite anti-desserrage doivent être étudiés avec un soin tout particulier et les coûts d'étude et de réalisation sont prohibitifs.

La présente invention vise à remplacer les dispositifs de maintien de joint par écrou vissé sur le bout d'arbre par un dispositif de maintien sûr, ne nécessitant pas d'opérations complexes d'usinage, et d'un encombrement plus faible que les dispositifs antérieurs.

On a déjà utilisé pour ce faire des joints maintenus par deux bagues retenues sur l'arbre par un circlip engagé dans une rainure de l'arbre. Toutefois ce mode de fixation n'était pas encore satisfaisant car il ne convenait que pour des arbres de faible diamètre et d'autre part autorisait une liberté de rotation du joint, des bagues et du circlip qui n'est pas tolérable sur un arbre de turbomachine car elle peut être la cause de phénomènes d'usures et de vibrations indésirables pour le fonctionnement de la turbomachine.

L'invention a donc but de proposer un dispositif de maintien de joint d'étanchéité qui évite les problèmes précités en restant simple et d'un emploi aisé.

L'invention a donc pour object, de façon générale un dispositif de maintien d'un joint d'étanchéité à surface d'étanchéité cylindrique entre un bout d'arbre et l'alésage d'une pièce circulaire externe tel qu'il comporte une bague annulaire épaulée comprenant une portée cylindrique supportant la face cylindrique radialement interne du joint, ladite bague étant disposée sur une portée cylindrique de l'extrémité de l'arbre tandis que le joint est comprimé axialement entre un épaulement de la bague et une butée à élasticité axiale en appui contre un épaulement de l'arbre, et tel que la bague comporte un moyen de verrouillage axial sur l'extrémité de l'arbre, ledit moyen de verrouillage axial étant lui-même verrouillé circulairement sur la bague.

Selon une particularité de l'invention, le moyen de verrouillage est constitué par un segment annulaire fendu disposé dans une première rainure circulaire radialement externe du bout d'arbre coopérant avec une deuxième rainure circulaire radialement interne de l'alésage de la bague, le bout d'arbre et la bague comportant chacun au moins un premier fraisage radial d'introduction du segment.

Selon une autre caractéristique de l'invention, le bout d'arbre et la bague peuvent comporter des seconds fraisages radiaux diamétralement opposés aux premiers fraisages tandis que le bout d'arbre possèdera dans ledit second fraisage un perçage radial pour permettre une solidarisation provisoire du segment sur le bout d'arbre et permettre la rotation relative de la bague sur le segment pour assurer l'encliquetage d'une goupille axiale de verrou illage circulaire de la bague et d'une gorge du segment.

L'invention a également pour objet les turbomachines comprenant au moins un disque de compresseur ou de turbine entourant l'arbre de la turbomachine et comportant entre l'alésage dudit disque et l'arbre une disposition de maintien de joint d'étanchéité tel que décrit dans la présente demande.

Si le joint doit assurer une étanchéité statique, alors sa face circulaire d'étanchéité peut être appliquée directement sur l'alésage du disque tandis que l'on pourra interposer entre ladite face d'étanchéité et l'alésage du disque une bague consommable, si le joint est destiné à assurer une étanchéité dynamique.

D'autres caractéristiques de l'invention seront précisées dans le complément de description suivant dans lequel les éléments techniques seront mis en valeur sur une application à une étanchéité statique entre un arbre et un disque de compresseur de turbomachine, sans que cet exemple implique une restriction quelconque aux diverses applications possibles de l'invention. En regard de cette description sont annexées des figures parmi lesquelles :

- la figure 1 montre en demi-coupe longitudinale le rotor d'un compresseur haute pression de turbomachine comprenant entre l'alésage d'un disque et l'arbre un dispositif d'étanchéité statique selon l'invention ;
- la figure 2 montre une vue agrandie de détail II de la figure 1 ;
- la figure 3 montre le même détail en perspective, le joint d'étanchéité et la butée élastique étant retirés ;
- la figure 4 montre l'introduction du segment fendu dans sa gorge en vue selon F de la figure 3 ;
- la figure 5 montre une vue de bout selon A de la figure 2 la bague épaulée et le bout d'arbre lors de l'introduction du segment ;
- la figure 6 montre une vue similaire à celle de la figure 5, après que l'on ait fait tourner la bague épaulée pour permettre l'encliquetage de la goupille de la bague sur la gorge du segment pour assurer le verrouillage circulaire du segment ;
- la figure 7 est une vue similaire à la figure 2 pour une application du dispositif de maintien à une étanchéité dynamique entre un arbre et un disque ayant des vitesses de rotation différentes l'une de l'autre ;

- la figure 8 montre une vue en plan du segment annulaire de verrouillage de la bague épaulée sur le bout d'arbre.

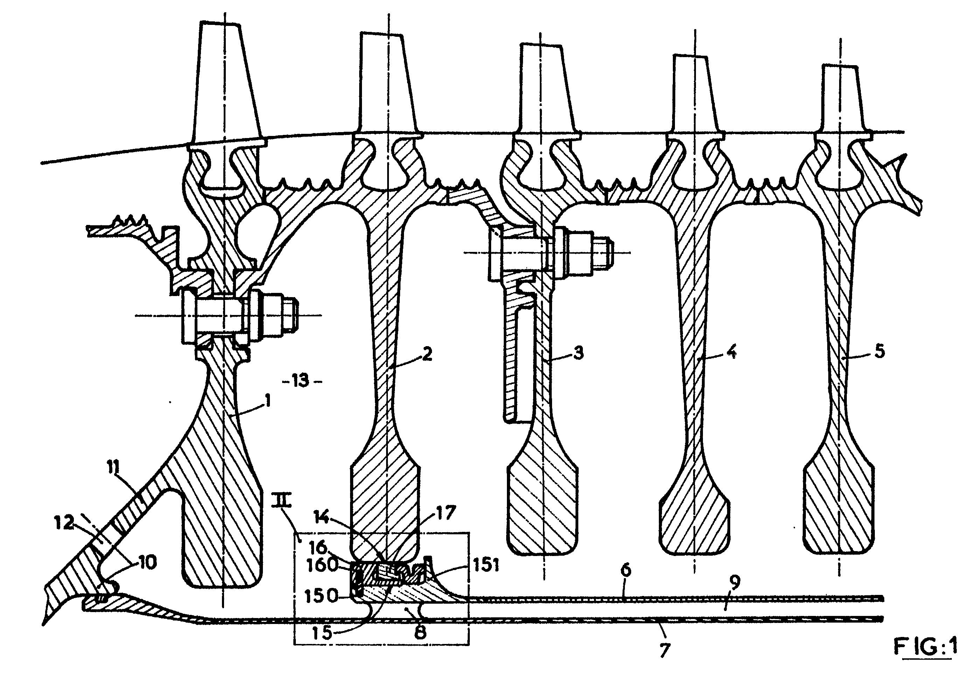

En référence à la figure 1, on a représenté en demi-coupe longitudinale le rotor du compresseur haute pression d'une turbomachine dont les étages d'aubes successifs sont portés par des disques repérés 1 à 5, ledit rotor étant entrainé en rotation par un arbre 6,7 lui-même mû en rotation par au moins une turbine située en aval d'une chambre de combustion, ces deux éléments connus n'étant pas représentés. L'arbre du compresseur est constitué en fait de deux arbres creux concentriques 6 et 7, l'arbre externe 6 étant soudé en plusieurs points 8 sur l'arbre interne 7 et délimitant un canal annulaire 9. L'extrémité amont de l'arbre 7 est en appui par un joint torique sur une portée cylindrique 10 solidaire d'une virole tronconique 11, formant une pièce unique avec le disque 1 en amont de celui-ci.

Des orifices 12 sont percés perpendiculairement à la virole 11 tronconique pour prélever de l'air en amont de celle-ci et l'accélérer, les orifices 12 formant accélérateur centripète pour l'aire qui les traverse, afin d'une part de pressuriser l'enceinte 13 formée entre les disques 1 et 2, la virole 11 et l'arbre 7 pour refroidir le disque 1 et lui éviter toute surchauffe et d'autre part pour acheminer par le canal annulaire 9 de l'air relativement froid afin de pressuriser l'espace situé entre deux turbines aval non représentés.

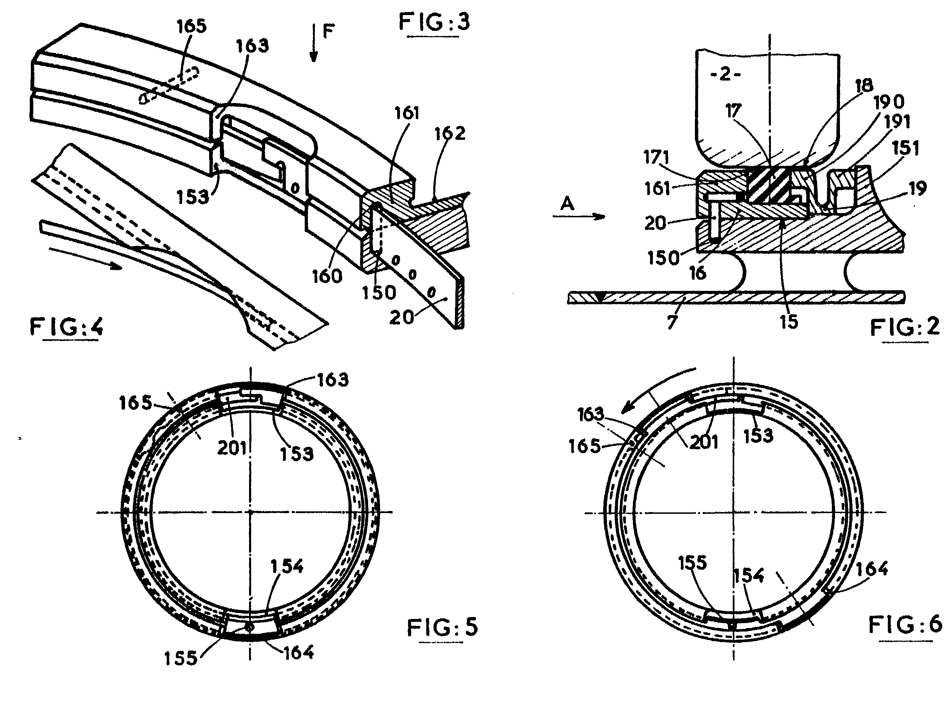

Pour canaliser l'air vers le canal 9 et éviter sa dispersion dans l'espace situé entre l'arbre 6 et les disques 2 à 5, un dispositif d'étanchéité est disposé entre l'alésage 14 du disque 2 et l'extrémité amont de l'arbre externe 6 ; ce dispositif portant application de l'invention fait l'objet du détail II et sera explicité en regard des figures 2 à 6 et 8.

Si l'on se réfère tout d'abord aux figures 2 et 3 et 8 l'extrémité amont de l'arbre 6 comporte une portée cylindrique 15 séparée extérieurement de la partie tubulaire proprement dite de l'arbre 6 par un épaulement radial 151. La portée 15 comprend à quelques distances de son extrémité une rainure circulaire radialement externe 150. Une bague annulaire 16 est disposée sur la portée 15 et comporte sur son alésage une rainure 160 radialement interne opposée à la rainure 150 du bout d'arbre. La bague 16 comporte un épaulement 161 et une portée cylindrique externe 162 sur laquelle est disposé un joint cylindrique à section carrée 17 dont la face d'étanchéité est la face cylindrique externe 171 qui coopère avec l'alésage interne 18 du disque 2. Le joint 17 peut être d'une nature quelconque et dans cette application précise on peut utiliser un joint carbone. Le joint 17 est comprimé axialement entre l'épaulement 161 de la bague 16 qui le supporte et une butée élastique axialement constituée par un anneau 19 à section droite en oméga dont une aile 190 est en appui contre le joint et l'autre aile 191 en appui sur l'épaulement 151 de l'arbre. La bague 16 est maintenue axialement et circulairement sur le bout d'arbre au moyen d'un segment annulaire fendu 20 que l'on entre dans les rainures 150-160 du bout d'arbre et de la bague par des fraisages radiaux 153,163 réalisés face à face dans le bout d'arbre et dans la bague.

Des seconds fraisages radiaux 154-164 diamétralement opposés aux fraisages 152,163 sont réalisés dans le bout d'arbre et la bague et un trou axial 155 est percé dans la fraisure 154 du bout d'arbre 15.

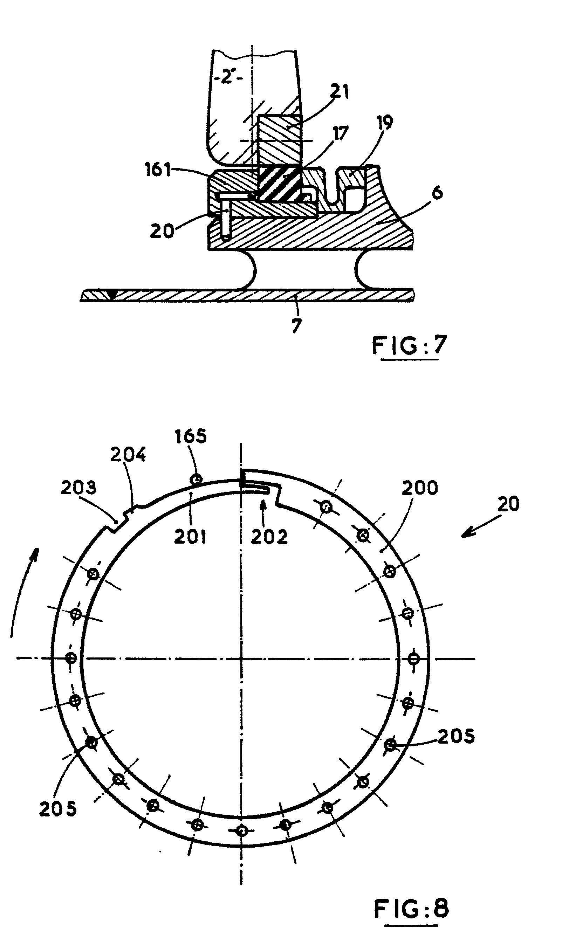

Le segment 20 (voir figure 8) va en s'amincissant d'une extrémité 200 à l'autre 201 tant dans le sens de l'épaisseur que dans celui de la hauteur radiale, les deux bords des extrémités se recouvrant en forme de baïonnette 202. A quelque distance de l'extrémité amincie 201, le segment comporte une encoche externe 203 séparée de l'extrémité 201 par un redan 204.

Sur la bague épaulée 16, à proximité du fraisage 163 est percé axialement un orifice dans lequel est logée une goupille 165 destinée à coopérer avec l'encoche 203 du segment 20 pour le verrouiller en rotation sur la bague 16.

Le segment 20 comporte également une série de perçages 205 régulièrement répartis sur sa périphérie et destinés à l'introduction d'un outil qui facilite la progression du jonc dans sa gorge au montage. Pour le montage l'un des perçages 205 coïncide avec le trou 155 du fraisage 154 du bout d'arbre 15 afin de permettre l'introduction provisoire d'une pige qui servira à solidariser momentanément le segment 20 et le bout d'arbre 15.

Le montage du dispositif de maintien selon l'invention tel que décrit ci-dessus s'effectue de la façon suivante :

On introduit d'abord l'anneau 19 en oméga sur la portée cylindrique 15 du bout d'arbre 6 jusqu'à ce qu'il bute sur l'épaulement 151. On place le joint 17 sur la portée cylindrique 162 de la bague 16, préalablement munie de sa goupille 165 et on installe la bague ainsi montée sur la portée 15 du bout d'arbre, en mettant en coïncidence les fraisages 153,163 et respectivement 154,164.

On introduit ensuite (figure 4) la partie amincie 201 du segment fendu 20 dans la rainure 150-160 par les fraisages 153-163 et on le visse périphériquement dans la rainure, dans le sens horaire, en s'aidant au besoin d'un outil introduit dans les perçages 205 du segment. Lorsque le segment est à poste dans sa gorge, il occcupe la position représentée figure 5. Le verrouillage axial du joint 17 est d'ores et déjà assuré.

Pour assurer le verrouillage circulaire on effectue ensuite les opérations suivantes :

On amène un perçage 205 du segment en coïncidence avec le trou 155 du fraisage 154 de l'arbre 6 et on introduit une pige dans le perçage 205 et le trou 155 pour immobiliser le segment sur l'arbre. On fait alors tourner la bague 16 dans le sens anti-horaire jusqu'à ce que la goupille 165 vienne encliqueter dans l'encoche 203 du segment (figure 6). On peut ensuite retirer la pige et faire tourner de quelques dizaines de degrés l'ensemble bague 16-segment 20 de façon à ce que les extrémités du segment ne soient plus en face du fraisage 153 de l'arbre. En solidarisant le segment 20 et la bague 16 au moyen de la goupille 165 et de l'encoche 203, on est assuré que les fraisages 153 et 154 de l'arbre 15 seront toujours décalés par rapport aux fraisages 163 et 164 de la bague et qu'ainsi, même si l'ensemble segment plus bague vient à tourner lors du fonctionnement de la turbomachine, le segment 20 ne pourra s'extraire de lui-même de sa rainure 150/160.

Le démontage du dispositif de maintien du joint s'effectue en appuyant sur la partie amincie 201 du segment pour libérer l'encoche 203 de la goupille 165 et retirer le segment de sa gorge.

La figure 7 montre une application du dispositif ci-dessus décrit à un joint d'étanchéité dynamique. Dans ce cas le disque 2' ne tourne pas à la même vitesse que l'arbre et si on utilisait le dispositif d'étanchéité ci-dessus tel qu'il a été décrit, la vitesse rotative du joint 17 sur le disque 2' risquerait d'entraîner l'usure de l'alésage du disque. Cette pièce étant onéreuse. On réalise alors une légère modification du disque et on interpose entre lui et la face d'étanchéité du joint 17 une bague 21 fixée sur le disque par exemple par vis ou rivets ; cette bague pouvant être consommable subira les efforts de frottements du joint et devra seule être changée en cas d'usure anormale, en lieu et place du disque.

Le dispositif de maintien d'un joint d'étanchéité tel que décrit présente l'avantage d'être simple à réaliser et de permettre l'impossibilité de démontage accidentel du joint, sous un volume très réduit qui le rend utilisable sur des arbres de faible diamètre.

Son utilisation sur les turbomachines modernes permet d'espacer les visites systématiques de sécurité sur cet endroit de la turbomachine.

## Revendications

1. Dispositif de maintien d'un joint d'étanchéité à surface d'étanchéité cylindrique entre un bout d'arbre (6) et l'alésage d'une pièce circulaire externe (2) caractérisé en ce qu'il comporte une bague annulaire épaulée (16) comprenant une portée cylindrique supportant la face cylindrique radialement interne du joint (17), ladite bague étant disposée sur une portée cylindrique (15) de l'extrémité de l'arbre tandis que le joint (17) est comprimé axialement entre un épaulement (161) de la bague et une butée à élasticité axiale (19) en appui contre un épaulement (151) de l'arbre, et en ce que la bague (16) comporte un moyen (20) e verrouillage axial sur l'extrémité de l'arbre, ledit moyen de verrouillage axial étant lui-même verrouillé circulairement sur la bague (16).

2. - Dispositif de maintien selon la revendication 1, caractérisé en ce que le moyen de verrouillage est constitué par un segment (20) annulaire fendu disposé dans une première rainure circulaire (150) radialement externe du bout d'arbre (6) coopérant avec une deuxième rainure circulaire (160) radialement interne de l'alésage de la bague (16), le bout d'arbre et la bague comportant chacun au moins un premier fraisage radial (153,163) d'introduction du segment.

3. - Dispositif de maintien selon la revendication 2, caractérisé en ce que le segment (20) comporte une extrémité radialement amincie (201) et à proximité de ladite extrémité une gorge (203) sur sa face circulaire externe, ladite gorge étant apte à coopérer avec une goupille axiale (165) de verrouillage circulaire fixée à demeure dans un trou axial traversant la rainure circulaire (160) de la bague.

4. - Dispositif de maintien selon l'une des revendications 2 ou 3 caractérisé en ce que le segment (20) comporte des trous (205) régulièrement répartis sur sa périphérie pour permettre d'engager un outil d'aide à son introduction circulaire par vissage dans les gorges (150,160) de la bague et du bout d'arbre.

5. - Dispositif de maintien selon l'une des revendications 3 ou 4, caractérisé en ce que le bout d'arbre et la bague comportent des seconds fraisages radiaux (154,164) diamétralement opposés aux premiers fraisages (153,163) et en ce que le bout d'arbre possède dans ledit second fraisage un perçage axial pour permettre une solidarisation provisoire du segment sur le bout d'arbre et permettre la rotation relative de la bague sur le segment pour assurer l'encliquetage de la goupille (165) de la bague (16) et de la gorge (203) du segment.

6. - Dispositif de maintien d'un joint d'étanchéité selon l'une quelconque des revendications 1 à 5, caractérisé en ce que la butée à élasticité axiale est consituée par un anneau à section en oméga (19) dont une aile (191) est en appui sur un épaulement de l'arbre et une autre aile (190) en appui sur une face radiale du joint d'étanchéité (17).

7. - Turbomachine comprenant au moins un disque (2) de compresseur ou de turbine posséedant un alésage entourant l'arbre (6,7) de la turbomachine, caractérisé en ce qu'il comporte entre l'alésage dudit disque et l'arbre un dispositif d'étanchéité selon l'une des revendications 1 à 6.

8. - Turbomachine selon la revendication 7 comprenant au moins un disque (2') de compresseur ou de turbine posséedant une vitesse de rotation différente de celle de l'arbre (6,7) et comportant entre ledit disque et l'arbre un dispositif d'étanchéité selon l'une des revendications 1 à 6, caractérisé en ce que le disque comporte une bague consommable (21) interposée entre le joint d'étanchéité (17) et l'alésage du disque (2'), ladite bague consommable étant fixée sur le disque.

## Claims

1. A device for holding a sealing gasket with a cylindrical sealing surface between a shaft end (6) and the bore of an outer circular component (2) characterized in that it comprises a shouldered annular ring (16) comprising a cylindrical seat bearing the radially inner cylindrically surface of the gasket (17), the ring being disposed on a cylindrical seat (15) of the end of the shaft while the gasket (17) is axially compressed between a shoulder (161) of the ring and an axially elastic stop (19) bearing against a shoulder (151) of the shaft and in that the ring (16) comprises means (20) for axial locking on the end of the shaft, the axial locking means itself being locked on the ring (t16) in a circular manner.

2. A holding device as claimed in claim 1, characterized in that the locking means is formed by a split annular segment (20) disposed in a first radially outer circular groove (150) of the shaft end (6) cooperating with a second radially inner circular groove (160) of the bore of the ring (16), the shaft end and the ring each comprising at least a first radial milled portion (153, 163) for the introduction of the segment.

3. A holding device as claimed in claim 2, characterized in that the segment (20) comprises a radially thinned end (201) and, in the vicinity of this end, a groove (203) on its outer circular surface, this groove being designed to cooperate with an axial pin (165) for circular locking permanently fixed in an axial hole passing through the circular groove (160) of the ring.

4. A holding device as claimed in one of claims 2 or 3, characterized in that the segment (20) comprises holes (205) regularly spaced over its periphery to allow the engagement of a tool helping its circular insertion by screwing into the grooves (150, 160) of the ring and the shaft end.

5. A holding device as claimed in one of claims 3 or 4, characterized in that the shaft end and the ring comprise second radial milled portions (154, 164) which are diametrically opposite to the first milled portions (153, 163) and in that the shaft end comprises an axial hole in the second milled portion to allow the temporary connection of the segment to the shaft end and the relative rotation of the ring on the segment to ensure the snap-locking of the pin (165) of the ring (16) and the groove (203) of the segment.

6. A holding device for a sealing gasket as claimed in any one of claims 1 to 5, characterized in that the axially elastic stop is formed by a ring of omega-shaped section (19), one flange (191) bearing on a shoulder of the shaft and another flange (190) bearing on a radial surface of the sealing gasket (17).

7. Turbo-machine comprising at least a compressor or turbine disc (2) having a bore surrounding the shaft (6, 7) of the turbo-machine, characterized in that it comprises a sealing gasket as claimed in one of claims 1 to 6 between the bore of the disc and the shaft.

8. Turbo-machine as claimed in claim 7, comprising at least one compressor or turbine disc (2') having a speed of rotation differing from that of the shaft (6, 7) and comprising a sealing gasket as claimed in one of claims 1 to 6 between the disc and the shaft, characterized in that the disc comprises an expendable ring (21) interposed between the sealing gasket (17) and the bore of the disc (2'), the expendable ring being fixed on the disc.

**Patentansprüche**

1. Vorrichtung zur Halterung einer Dichtung mit zylindrischer Dichtungsfläche zwischen einem Wellenende (6) und der Bohrung eines kreisrunden äußeren Teils (2), dadurch gekennzeichnet, daß ein mit einer Schulter versehener Ring (16) vorgesehen ist, der eine zylindrische Auflagefläche besitzt, auf der die radial innere zylindrische Fläche der Dichtung (17) aufliegt, wobei dieser Ring auf einer zylindrischen Auflagefläche (15) des Endbereichs der Welle angeordnet ist, während die Dichtung (17) axial zwischen einer Schulter (161) des Rings und einem in axialer Richtung elastischen Anschlag (19) komprimiert ist, der sich gegen eine Schulter (151) der Welle abstützt, und daß der Ring (16) ein Mittel (20) zu seiner axialen Festlegung auf dem Endbereich der Welle aufweist, das seinerseits an dem Ring (16) gegen Drehung gesichert ist.

2. Haltevorrichtung nach Anspruch 1, dadurch gekennzeichnet, daß das Festlegungsmittel aus einem geschlitzten ringförmigen Segment (20) besteht, das in einer ersten radial äußeren Ringnut (150) des Wellenendes (6) angeordnet ist, die mit einer zweiten radial inneren angeordneten Ringnut (160) der Bohrung des Rings (16) zusammenwirkt, und daß das Wellenende und der Ring jeweils wenigstens eine erste radiale Einfräsung (53, 163) für das Einführen des Segments besitzen.

3. Haltevorrichtung nach Anspruch 2, dadurch gekennzeichnet, daß das Segment (20) einen sich in radialer Richtung verjüngenden Endbereich (201) und in der Nähe dieses Endbereichs eine auf der kreisförmigen Außenseite angeordnete Kehle (203) besitzt, die mit einem axialen Stift (165) zur Sicherung gegen Drehung zusammenwirkt, der in einer die Ringnut (160) des Rings (16) durchdringenden axialen Bohrung bleibend befestigt ist.

4. Haltevorrichtung nach einem der Ansprüche 2 oder 3, dadurch gekennzeichnet, daß das Segment (20) auf seinem Umfang gleichmäßig verteilte Löcher (205) aufweist, die das Angreifen eines Hilfswerkzeugs ermöglichen, mit dem das Segment (20) durch Schraubbewegung in die Nuten (150, 160) des Rings und des Wellenendes in einer Kreisbahn einführbar ist.

5. Haltevorrichtung nach einem der Ansprüche 3 oder 4, dadurch gekennzeichnet, daß das Wellenende und der Ring zweite radiale Einfräsungen (154, 164) besitzen, die den ersten Einfräsungen (153, 163) diametral gegenüber liegen, und daß das Wellenende in dieser zweiten Einfräsung eine axiale Bohrung aufweist, die eine vorläufige Befestigung des Segments an dem Wellenende und eine relative Drehung des Rings auf dem Segment ermöglicht, um dadurch das Einrasten des Stifts (165) des Rings (16) in die Kehle (203) des Segments herbeizuführen.

6. Haltevorrichtung nach einem der Ansprüche 1 bis 6, dadurch gekennzeichnet, daß der in axialer Richtung elastische Anschlag von einem Ring (19) mit omegaförmigem Querschnitt gebildet ist, der sich mit einem Schenkel (191) gegen eine Schulter der Welle und mit einem anderen Schenkel gegen eine radiale Fläche der Dichtung (17) abstützt.

7. Turbomaschine mit wenigstens einer Verdichter- oder Turbinenscheibe (2) mit einer die Welle (6, 7) der Turbomaschine umgebenden Bohrung, dadurch gekennzeichnet, daß zwischen der Bohrung der Scheibe und der Welle eine Dichtungsvorrichtung nach einem der Ansprüche 1 bis 6 angeordnet ist.

8. Turbomaschine nach Anspruch 7 mit wenigstens einer Verdichter- oder Turbinenscheibe (2'), deren Drehgeschwindigkeit von der Drehgeschwindigkeit der Welle (6, 7) abweicht, sowie mit einer zwischen der Scheibe und der Welle angeordneten Dichtungsvorrichtung nach einem der Ansprüche 1 bis 6, dadurch gekennzeichnet, daß die Scheibe einen Ring (21) aus Verschleißmaterial aufweist, der zwischen der Dichtung (17) und der Bohrung der Scheibe (2') angeordnet und an der Scheibe befestigt ist.

FIG:1

FIG:3

FIG:4

FIG:2

FIG:5

FIG:6

EP 0 263 726 B1

FIG:7

FIG:8